# DEMANDE DE BREVET EUROPEEN

(11) **EP 1 083 121 A1**
(43) Date de publication de la demande: **14.03.2001**
(21) Numéro de dépôt: 00440241.8
(22) Date de dépôt: 08.09.2000
(51) Int. Cl.: B62H 1/12, B62H 7/00

(54) **Dispositif de stabilisation de roue de bicyclette**

(30) Priorité: 10.09.1999 FR 9911450
(71) Demandeur: Benoit, Eric, 51210 Montmirail (FR); Jamain, Daniel, 02540 Marchais-en-Brie (FR)
(72) Inventeur: Benoit, Eric, 51210 Montmirail (FR); Jamain, Daniel, 02540 Marchais-en-Brie (FR)
(74) Mandataire: Rhein, Alain

(57) **Abrégé**

Dispositif de stabilisation pour roue de stabilisateur pour bicyclette d'enfant, du type comprenant d'une part un stabilisateur (2) comportant deux bras de liaison (20) solidarisés au cadre, qui s'étendent de part et d'autre de la roue arrière (10) de la bicyclette (1) et qui portent chacun une roue stabilisatrice (3), et d'autre part une pièce (40) intercalée entre la roue stabilisatrice (3) et son bras de liaison (20), permettant un déplacement dans le sens vertical de la roue stabilisatrice (3) par rapport au bras de liaison (20), tandis qu'un moyen élastique permet de rappeler la roue stabilisatrice (3) vers le bas de manière qu'elle repose sur le sol avec une précontrainte.

La pièce (40) est de forme allongée et est montée pivotante sur le bras de liaison (20) par l'une de ses extrémités, tandis que l'autre extrémité porte la roue stabilisatrice (3) dont l'axe de rotation est parallèle à l'axe de pivotement.

## Description

La présente invention a pour objet un dispositif de stabilisation pour roue de stabilisateur pour bicyclette d'enfant.

De manière traditionnelle, un enfant apprend à aller à bicyclette à l'aide de deux roues stabilisatrices latérales disposées de chaque côté de la roue motrice arrière, et reliées chacune au moyeu de ladite roue par l'intermédiaire d'un bras.

Les roues stabilisatrices permettent le maintien de la bicyclette dans un plan vertical durant l'apprentissage de l'enfant, palliant ainsi le défaut d'équilibre de celui-ci.

Les stabilisateurs commercialisés à ce jour sont pour la plupart du type rigide, c'est-à-dire que la longueur des bras est réglée de manière que les points de contact avec le sol des roues stabilisatrices et de la roue motrice arrière de la bicyclette soient alignés.

Or, outre le fait que le réglage de la longueur des bras n'est généralement qu'approximatif, ces dispositifs présentent des inconvénients qui nuisent à leur efficacité, en sorte que l'apprentissage est plus long.

Ainsi, lorsque l'une des roues, ou les deux, passe sur un obstacle la surélevant, la roue motrice arrière de la bicyclette ne touche plus le sol, en sorte que ladite roue n'assure plus sa fonction motrice, stoppant ainsi la bicyclette à moins d'un élan suffisant.

Par ailleurs, les stabilisateurs rigides présentent l'inconvénient de ne pas permettre l'inclinaison de la bicyclette dans une courbe, en sorte que l'enfant se trouve déporté par la force centrifuge, ce qui l'incite à se pencher et nuit à son apprentissage.

Pour pallier cet inconvénient, on règle la longueur des bras en laissant un certain jeu, ce qui présente toutefois l'inconvénient que la bicyclette ne demeure pas dans un plan vertical, et qu'en déplacement elle passe en appui d'une roue stabilisatrice sur l'autre, entraînant par là même l'enfant dans un mouvement de dandinement préjudiciable à son équilibre et à son assise.

Par ailleurs, même si les bras ne sont pas réglés de manière à laisser un certain jeu, à la longue ils fléchissent, ce qui entraîne les mêmes inconvénients.

Pour remédier à ces inconvénients, il a été proposé de munir les stabilisateurs de dispositifs amortisseurs donnant aux roues stabilisatrices une certaine amplitude de mouvement dans un sens vertical, pour permettre d'une part l'absorption des inégalités du sol, et d'autre part le rappel dans un plan vertical de la bicyclette.

Ainsi, le dispositif décrit dans le document FR 2.442.172 comporte des bras stabilisateurs comprenant une partie apte à être élastiquement déformée et à reprendre sa forme initiale, avec pour inconvénient de n'être pas fiable dans le temps.

Un autre dispositif, décrit dans le document US 2.450.979, propose des bras stabilisateurs montés oscillants et reliés élastiquement à la bicyclette par l'intermédiaire d'un système à ressort analogue à un amortisseur. Ce dispositif est d'une conception et d'un montage particulièrement compliqués.

On connaît également des dispositifs de stabilisateur comprenant des éléments amortisseurs intercalés entre les bras et les roues. De tels dispositifs sont par exemple décrits dans les documents DE 90 14 336 et NL 1 007 497.

Le document DE 90 14 336 décrit un dispositif de stabilisateur pour bicyclette, comportant deux bras de liaison solidarisés au cadre, s'étendant de part et d'autre de la roue arrière de la bicyclette, et portant chacun une roue stabilisatrice, cette dernière étant liée à son bras par l'intermédiaire d'un élément amortisseur. Cet élément amortisseur se présente sous la forme d'un tube positionné verticalement et solidarisé ainsi audit bras, et comportant latéralement et longitudinalement une fente dans laquelle est engagé et peut s'y déplacer l'essieu de la roue, tandis qu'un ressort logé dans la partie supérieure dudit tube au-dessus de l'essieu, rappelle ce dernier vers le bas.

Ce dispositif présente l'inconvénient d'être particulièrement encombrant, notamment les tubes, lesquels en outre, du fait de leur positionnement de part et d'autre de la roue arrière et au-dessus des roues stabilisatrices, constituent des éléments saillants susceptibles d'être heurtés par l'enfant.

Le document NL 1 007 497 quant à lui décrit également un dispositif de stabilisateur pour bicyclette, comportant deux bras de liaison solidarisés au cadre et qui s'étendent de part et d'autre de la roue arrière de la bicyclette, et portant chacun une roue stabilisatrice, cette dernière étant liée à son bras par l'intermédiaire d'un amortisseur. Cet amortisseur est disposé verticalement et est solidarisé ainsi au bras stabilisateur, et il comporte une tige rappelée par un ressort, à l'extrémité de laquelle est solidarisé transversalement l'essieu de la roue.

Ce dispositif nécessite l'utilisation de bras de liaison spécifique, il ne peut en aucun cas être adapté sur des stabilisateurs existants.

Les dispositifs précités sont pour la plupart très complexes et donc d'un coût relativement important. Or, l'utilisation de stabilisateurs est parfois de courte durée, certains enfants apprenant très vite à aller à bicyclette, aussi la dépense pour l'achat des dispositifs existants n'est pas toujours justifiée.

Par ailleurs, tous les dispositifs précités consistent en des ensembles spécifiques, c'est-à-dire qu'ils incorporent également les bras de liaison, et qu'ils ne peuvent donc pas être adaptés sur des dispositifs classiques de stabilisateurs.

La présente invention a pour but de remédier aux divers inconvénients précités en proposant un dispositif de stabilisation pour roue stabilisatrice d'une bicyclette d'enfant, qui avantageusement est adaptable sur la plupart des stabilisateurs existants et qui est de conception simple et donc peu coûteux.

Le dispositif de stabilisation pour roue de stabilisateur pour bicyclette d'enfant, du type comprenant d'une part un stabilisateur comportant deux bras de liaison solidarisés au cadre qui s'étendent de part et d'autre de la roue arrière de la bicyclette et qui portent chacun une roue stabilisatrice, et d'autre part une pièce intercalée entre ladite roue stabilisatrice et son bras de liaison, permettant un déplacement dans le sens vertical de ladite roue stabilisatrice par rapport audit bras de liaison, tandis qu'un moyen élastique permet de rappeler ladite roue stabilisatrice vers le bas de manière qu'elle repose sur le sol avec une précontrainte, et il se caractérise essentiellement en ce que ladite pièce est de forme allongée et est montée pivotante sur le bras de liaison par l'une de ses extrémités, tandis que l'autre extrémité porte la roue stabilisatrice dont l'axe de rotation est parallèle à l'axe de pivotement.

Selon une caractéristique additionnelle du dispositif selon l'invention, la pièce pivotante est limitée en pivotement par un moyen de butée.

Selon une autre caractéristique additionnelle du dispositif selon l'invention, la tension du moyen élastique de rappel est réglable.

Selon un mode de réalisation particulier du dispositif selon l'invention, le moyen de tension consiste en un ressort de torsion, positionné concentriquement à l'axe de pivotement, et qui est solidaire du bras de liaison par l'une de ses branches et de la pièce pivotante par son autre branche.

Selon une caractéristique additionnelle du mode de réalisation particulier du dispositif selon l'invention, le ressort de torsion est logé dans une cavité annulaire pratiquée dans la pièce pivotante, concentriquement à l'axe de pivotement, tandis que la branche dudit ressort, destinée à être solidarisée à ladite pièce, est engagée dans une gorge tangente à ladite cavité annulaire et débouchant dans celle-ci.

Selon une autre caractéristique additionnelle du mode de réalisation particulier du dispositif selon l'invention, la pièce comporte plusieurs gorges tangentes à la cavité annulaire et qui convergent vers celle-ci.

Un stabilisateur rigide équipé de dispositifs de stabilisation selon l'invention permet que les roues stabilisatrices et la roue arrière de la bicyclette soient en permanence au contact avec le sol. Le rappel élastique de dureté réglable permet de rétablir la verticalité de la bicyclette et d'éviter un balancement d'une roue stabilisatrice sur l'autre.

L'enfant apprend à aller à bicyclette en toute sécurité et en toute confiance, et c'est donc plus rapidement qu'il trouve l'équilibre. C'est d'une façon continue que l'enfant utilise de moins en moins la force de rappel élastique des dispositifs de stabilisation, et trouve ainsi son équilibre.

Le réglage de la tension du rappel élastique permet de modifier la précontrainte en fonction du poids de l'enfant et/ou des progrès de celui-ci.

De plus, le dispositif de stabilisation selon l'invention est de conception simple, moins complexe et plus légère que celle des dispositifs existants. En outre, il peut être utilisé sur des stabilisateurs rigides connus, en étant éventuellement monté au moyen d'un adaptateur spécifique permettant une concordance avec la forme du bras de liaison.

Les avantages et les caractéristiques du dispositif selon l'invention, ressortiront plus clairement de la description qui suit et qui se rapporte au dessin annexé, lequel en représente un mode de réalisation non limitatif.

Dans le dessin annexé :

La figure 1 représente une vue schématique partielle en élévation d'une roue de bicyclette équipée d'un stabilisateur lui-même muni d'un dispositif de stabilisation selon l'invention.

La figure 2 représente une vue schématique en perspective du même dispositif.

La figure 3 représente une vue schématique en perspective et en éclaté du même dispositif.

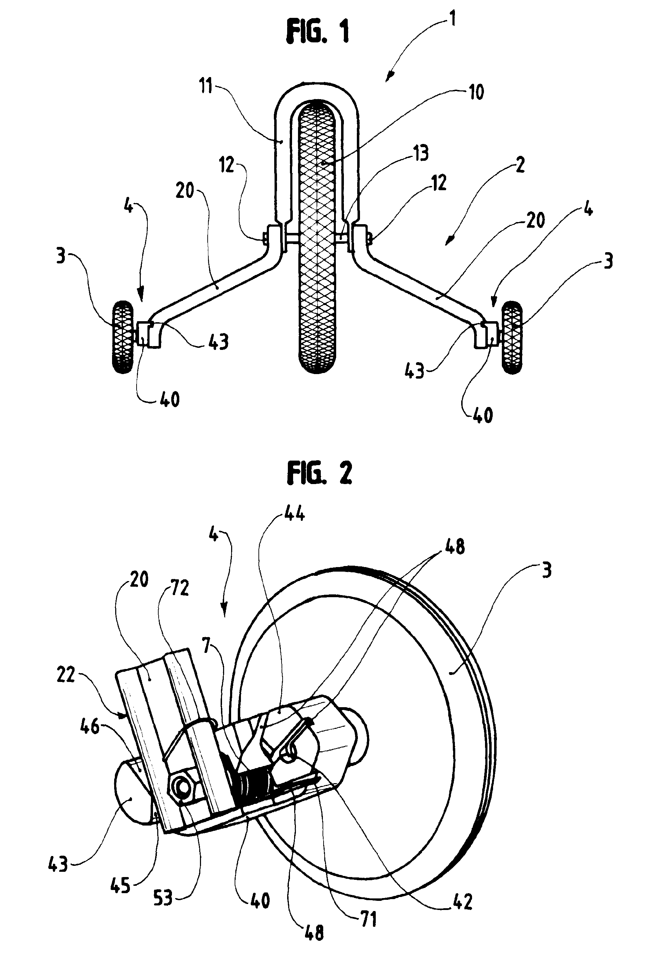

En référence à la figure 1, on peut voir une bicyclette 1, dont ne sont représentées que la roue arrière 10 et la fourche 11 qui porte celle-ci, ainsi qu'un stabilisateur 2 rigide de type courant.

Le stabilisateur 2 comprend deux bras 20 qui s'étendent de part et d'autre de la roue arrière 10, et qui portent chacun une roue stabilisatrice 3. Les bras sont solidarisés fixement au cadre de la bicyclette 1, en l'occurrence et de manière traditionnelle par l'intermédiaire des écrous 12 du moyeu 13 de la roue arrière 10.

Sur un stabilisateur 2 de type classique, les roues stabilisatrices 3 sont fixées rigidement aux bras 20, et ceux-ci sont réglés en longueur de manière que les points de contact des roues stabilisatrices 3 et de la roue arrière 10 avec le sol soient alignés, en sorte de garantir la verticalité de la bicyclette 1.

Selon l'invention, un dispositif de stabilisation 4 est intercalé entre chacune des roues stabilisatrices 3 et le bras 20 qui la porte, pour permettre un déplacement vertical des roues stabilisatrices 3 en vue d'absorber les éventuelles dénivellations du sol, tout en favorisant le rappel de la bicyclette 1 dans une position verticale.

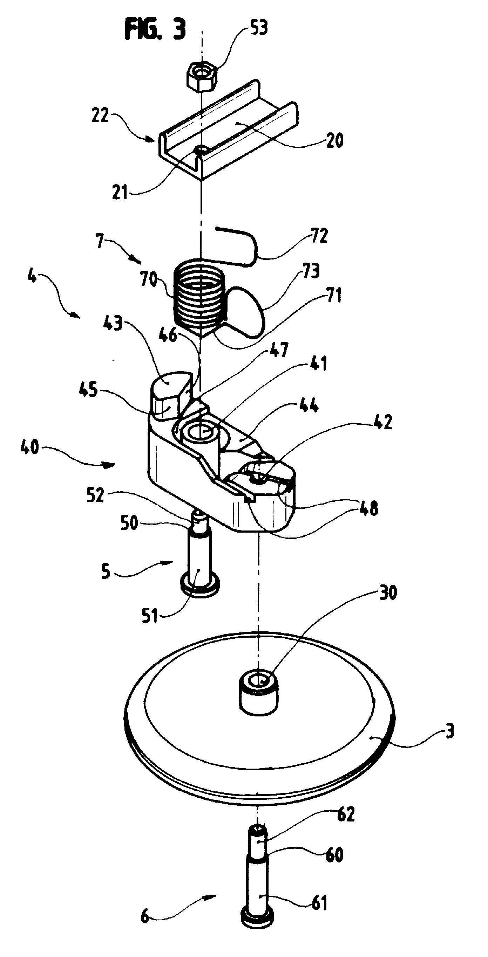

Un tel dispositif de stabilisation 4 associé à une roue stabilisatrice 3 et à un bras de liaison 20, représenté partiellement, est représenté sur les figures 2 et 3 qui vont maintenant être décrites.

Le dispositif de stabilisation 4 selon l'invention comporte une pièce 40 de forme allongée présentant deux alésages transversaux 41 et 42 d'axes parallèles, dont l'un, l'alésage 41, est destiné à recevoir un pivot 5 de solidarisation au bras 20, tandis que l'autre, l'alésage 42, est destiné à recevoir un axe 6 de solidarisation de la roue stabilisatrice 3.

Dans le mode de réalisation représenté, le pivot 5 présente essentiellement deux parties séparées par un épaulement 50, à savoir une partie lisse 51 qui traverse la pièce 40 par l'alésage 41 et qui autorise le pivotement de la pièce 40, et une partie filetée 52 qui traverse le bras 20 par un alésage 21 et reçoit un écrou 53, tandis que l'axe 6 comporte également deux parties séparées par un épaulement 60, à savoir une partie lisse 61 qui traverse la roue stabilisatrice 3 par un alésage central 30 et permet la rotation libre de celle-ci, et une partie filetée 62 destinée à être vissée dans l'alésage 42 qui est taraudé ou qui incorpore un écrou prisonnier ou tout autre moyen de fixation approprié.

La roue stabilisatrice 3 est ainsi déportée par rapport au pivot 5 autour duquel la pièce 40 peut tourner, toutefois de manière limitée angulairement par l'intermédiaire d'une butée 43 qui fait saillie de la pièce 40, et plus exactement de sa face 44 en regard du bras de liaison 20, à proximité de l'alésage 41 et parallèlement à l'axe de celui-ci, et qui est apte à venir au contact d'un bord 20 du bras de liaison 20 au gré du pivotement de la pièce 40 dans un sens ou dans un autre.

La butée 43 présente ainsi deux faces 45 et 46 parallèles à l'axe de pivotement de la pièce 40 et faisant entre elles un angle qui correspond à l'amplitude du débattement angulaire désiré.

La pièce 40 peut donc osciller entre deux positions, une position extrême haute lorsque la face 45 vient au contact du bord 22 du bras de liaison 20, et une position extrême basse lorsque la face 46 vient au contact de ce bord 22.

On peut voir également sur la figure 3 que la face 44 comporte d'une part une cavité annulaire 47 concentrique à l'alésage 41, et d'autre part des gorges 48 qui convergent et débouchent dans la cavité annulaire 47. Comme on peut le voir sur la figure 2, la cavité annulaire 47 est destinée à loger le corps 70 d'un ressort de torsion 7, tandis qu'une branche 71 de ce dernier est engagée dans une gorge 48 et que l'autre branche 72 qui est en forme de crochet est accrochée au bras de liaison 20.

La tension exercée par le ressort 7 tend à abaisser la pièce 40 jusqu'à ce que la roue stabilisatrice 3 prenne sa position extrême basse laquelle est réglée, par le positionnement adéquat des bras de liaison 20, de manière à correspondre à un niveau inférieur à celui de la roue arrière 10, en sorte de créer une précontrainte lorsque la bicyclette est posée au sol et que l'enfant est en selle.

En utilisation, les roues stabilisatrices 3, et plus exactement les pièces 40, absorbent les différentes dénivellations, ce qui favorise la motricité.

Dans les virages, les roues stabilisatrices restent au contact du sol tout en autorisant une légère inclinaison de la bicyclette, toutefois limitée dans une position extrême par la butée 43.

Le rappel élastique permet de redresser la bicyclette et évite un balancement de celle-ci d'un côté sur l'autre.

Un stabilisateur rigide 2 équipé d'un dispositif de stabilisation 4 selon l'invention donne à l'enfant une véritable sensation de deux roues, tout en offrant des garanties de sécurité. Le passage de la conduite avec roues stabilisatrices mobiles à la conduite sans lesdites roues, s'effectue avec la plus grande confiance, car avec le temps l'enfant utilise de moins en moins la force de rappel.

On notera que le ressort 7 assure un durcissement progressif au fur et à mesure de sa compression, c'est-à-dire que plus la bicyclette est inclinée, plus la force de rappel est importante.

Par ailleurs il est possible de régler la dureté du ressort 7 par le déplacement de sa branche 72 dans l'une ou l'autre des gorges 48, ce qui peut être réalisé aisément du fait notamment que le ressort 7 est maintenu d'une part dans la cavité annulaire 47 et d'autre part par le pivot 5, et que la branche 72 présente une boucle 73 de préhension.

On notera que la pièce 40 peut être solidarisée au bras de liaison dans différentes configurations, c'est-à-dire qu'elle peut s'étendre vers l'avant ou vers l'arrière, et être placée du côté intérieur ou du côté extérieur, sachant que la configuration préférée est vers l'arrière et du côté extérieur.

De manière avantageuse la pièce 40 vient de moulage d'une matière plastique du type acrylonitrile butadiène styrène (ABS), elle peut toutefois être réalisée en métal ou toute autre matière.

Il va de soi que la présente invention ne saurait être limitée à la description qui précède d'un de ses modes de réalisation, susceptible de subir quelques modifications sans pour autant sortir du cadre de l'invention.

## Revendications

1. Dispositif de stabilisation pour roue de stabilisateur pour bicyclette d'enfant, du type comprenant d'une part un stabilisateur (2) comportant deux bras de liaison (20) solidarisés au cadre, qui s'étendent de part et d'autre de la roue arrière (10) de la bicyclette (1) et qui portent chacun une roue stabilisatrice (3), et d'autre part une pièce (40) intercalée entre la roue stabilisatrice (3) et son bras de liaison (20), permettant un déplacement dans le sens vertical de ladite roue stabilisatrice (3) par rapport audit bras de liaison (20), tandis qu'un moyen élastique (7) permet de rappeler ladite roue stabilisatrice (3) vers le bas de manière qu'elle repose sur le sol avec une précontrainte, caractérisé en ce que ladite pièce (40) est de forme allongée et est montée pivotante sur le bras de liaison (20) par l'une de ses extrémités, tandis que l'autre extrémité porte la roue stabilisatrice (3) dont l'axe de rotation est parallèle à l'axe de pivotement

2. Dispositif selon la revendication 1, caractérisé en ce que la pièce pivotante (40) est limitée en pivotement par un moyen de butée (43).

3. Dispositif selon la revendication 1 ou la revendication 2, caractérisé en ce que la tension du moyen élastique (7) de rappel est réglable.

4. Dispositif selon l'une quelconque des revendications précédentes, caractérisé en ce que le moyen de rappel consiste en un ressort de torsion (7), positionné concentriquement à l'axe de pivotement de la pièce pivotante (40), et qui est solidaire du bras de liaison (20) par l'une de ses branches (72), et de ladite pièce (40) par son autre branche (71).

5. Dispositif selon la revendication 4, caractérisé en ce que le ressort de torsion (7) est logé dans une cavité annulaire (47) pratiquée dans la pièce pivotante (40), concentriquement à l'axe de pivotement, tandis que la branche (71) dudit ressort (7), destinée à être solidarisée à ladite pièce (40), est engagée dans une gorge (48) tangente à ladite cavité annulaire (47) et débouchant dans celle-ci.

6. Dispositif selon la revendication 5, caractérisé en ce que la pièce pivotante (40) comporte plusieurs gorges (48) tangentes à la cavité annulaire (47) et qui convergent vers celle-ci.
